# EUROPEAN PATENT SPECIFICATION

(11) **EP 3 720 987 B1**
(45) Date of publication and mention of the grant of the patent: **26.01.2022**
(21) Application number: 18830305.1
(22) Date of filing: 05.12.2018
(51) Int. Cl.: C23C 18/16, C23C 18/34, C09D 5/00, C09D 5/44, C25D 5/40, C25D 5/48, C25D 13/06, C25D 5/12, F16C 29/04, F16C 31/04, F16C 29/00, B05D 1/00, B05D 1/18, B05D 3/00, B05D 3/12, C23C 18/36, C25D 13/16, C25D 13/22, F16C 29/06

(54) **PROCESS FOR COATING A GUIDE**
VERFAHREN ZUM BESCHICHTEN EINER FÜHRUNG
PROCÉDÉ DE REVÊTEMENT D'UN GUIDE

(30) Priority: 06.12.2017 IT 201700141347
(43) Date of publication of application: 14.10.2020
(73) Proprietor: Graf Synergy S.r.L., 41015 Nonantola (MO) (IT)
(72) Inventor: VACCARI, Andrea, 41015 Nonantola (MO) (IT); CASARINI, Nicola, 41015 Nonantola (MO) (IT)
(74) Representative: Luppi, Emanuele
(86) International application number: PCT/IB2018/059669
(87) International publication number: WO 2019/111177

(56) References cited:
- WO-A1-2017/044032

## Description

### Technical Field

The present invention relates to a process for coating a guide.

### Background Art

It is well known that guides made of metal material are used in the field of industrial machinery in order to permit handling one or more parts of the machinery.

A particular type of machine the portions of which are moved sliding on guides is represented by machines for machining and welding elements made of PVC. Generally, these machining operations require extreme precision, and so, to move parts, arms, tools and the like, ball-bearing guides are used.

In particular, the guides are provided with a seat in which the balls roll without scraping, and so such seat must have a sufficiently smooth and homogeneous surface finish, so as not to create friction.

The PVC is hot welded, i.e. by melting part of the material and juxtaposing the flaps of the elements to be welded.

However, during melting, a small fraction of the PVC tends to decompose, so gaseous chlorine is released which reacts with the water in the air in the form of moisture, producing hydrochloric acid.

As is known, hydrochloric acid is a strong acid and is extremely corrosive, therefore all parts of the machine can undergo corrosion during the course of even short time intervals.

Furthermore, the gaseous chlorine which develops determines the corrosion of the steel by pitting, causing the formation of holes that affect the stability of the workpiece.

In order to curb the corrosive effects of the chlorine, the most important parts of the machine from the machining point of view, i.e. tool bits and the like, are made of stainless steel, which is resistant to corrosion, but which has rather high costs compared to common carbon steel.

The remaining parts of the machine, including the guides, are generally made of common steels subsequently treated or coated to make them more resistant to corrosion.

Typical treatments which the machine parts undergo include coating the surfaces with a layer made of a metallic material or resin.

In particular, coating with metallic material is generally done by means of chrome or nickel plating processes, which allow the deposition of a very thin layer of chrome or nickel respectively.

Such coating gives the workpiece greater resistance to corrosion, but also greater surface hardness.

However, the metals used have limited corrosion resistance and after a certain time the coating is damaged by the corrosive action of the hydrochloric acid.

In particular, nickel has a higher corrosion resistance than chromium, as well as better adhesion to the surface to be coated, so nickel plating is far more widely used than chromium plating.

If, on the other hand, the metal guides are coated with resins, the operation is carried out by means of cataphoresis painting.

This process makes it possible to deposit a thin layer of resin on the surface of the metal guide in order to make it resistant to corrosion.

However, the resin layer has a rather rubbery texture, so it is not very suitable for the sliding of the balls, which would end up scraping on the surface of the seat.

Moreover, the resulting resin layer is rather delicate and the scraping of the balls can damage it or even partially remove it, leaving the surface of the guide uncovered.

However, these metal guide coating processes do have a number of drawbacks.

In fact, the nickel or chrome coating of the guides does not guarantee absolute protection from corrosion, but only for a certain period of time, so periodic maintenance of the metal guides is required, so as to restore the coating thereof. However, in order to do this maintenance work, the machine must be stopped and dismantled, with a significant increase in operating costs related to both labor and machining operations for the restoration of the coating, but also due to operation downtimes.

Moreover, the periodic metal coating restoration operations give rise to a ball sliding seat surface which can become irregular from the point of view of thickness, negatively affecting the correct movement of the machine parts, with negative effects on machining operation precision.

On the other hand, the coating of the guides with resin by means of cathodic painting does not ensure the correct sliding of the balls along the seat, and these tend to scrape, also removing part of the resin and leaving the guide exposed to corrosion. WO 2017/044032 A1 discloses a process for coating a metallic sliding member having a slide surface by coating with a lacquer comprising a resin, wherein said lacquer in turn is at least partly coated with a lipophilic composition coating to provide a slide layer with lowered friction.

### Description of the Invention

The main aim of the present invention is to provide a process for coating guides which permits effectively protecting the surface from corrosion.

As part of the described aim, one object of the present invention is to make it possible to reduce operating costs, particularly those associated with special maintenance.

Another object of the present invention is to ensure the correct movement of the sliding parts on the metal guide.

Another object of the present invention is to provide a process for coating a guide, which allows overcoming the aforementioned drawbacks of the prior art within the scope of a simple, rational, easy, efficient to use and cost-effective solution.

The aforementioned objects are achieved by the present process for coating a guide according to claim 1.

### Brief Description of the Drawings

Other characteristics and advantages of the present invention will become more evident from the description of a preferred, but not exclusive embodiment of a process for coating a guide, illustrated by way of an indicative, but non-limiting example, in the attached drawings in which:
Figure 1 is an axonometric view of the supplying step of a guide of the process according to the invention in a first embodiment;
Figure 2 is an axonometric partially cutaway view of the nickel-plating step of the guide of Figure 1 of the process according to the invention;
Figure 3 is an axonometric partially cutaway view of the cataphoresis painting step of the guide of Figure 1 of the process according to the invention;
Figure 4 is an axonometric partially cutaway view of the removal step of the guide of Figure 1 of the process according to the invention;
Figure 5 is an axonometric partially cutaway view of the guide of Figure 1 obtained with the process according to the invention;
Figure 6 is an axonometric view of an alternative embodiment of the guide obtained with the process according to the invention.

### Embodiments of the Invention

With particular reference to these illustrations, reference numeral 1 globally indicates a process for coating a guide.

The process for coating a guide according to the invention comprises at least the steps of supplying at least one guide 1 made of metallic material and comprising at least one outer surface 2, 3 provided with at least a first portion 2 adapted to slide at least one carriage 4 and at least a second portion 3 separate from the first portion 2.

Preferably, the guide 1 is made of carbon steel, but the possibility of providing a guide 1 made of non-metallic material, such as plastic, cannot be ruled out.

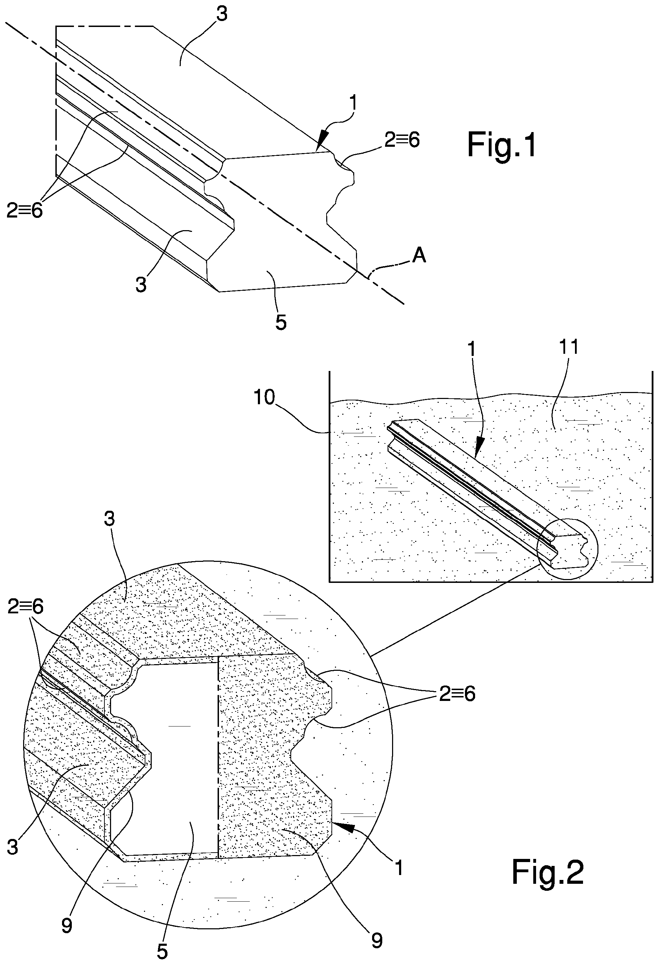

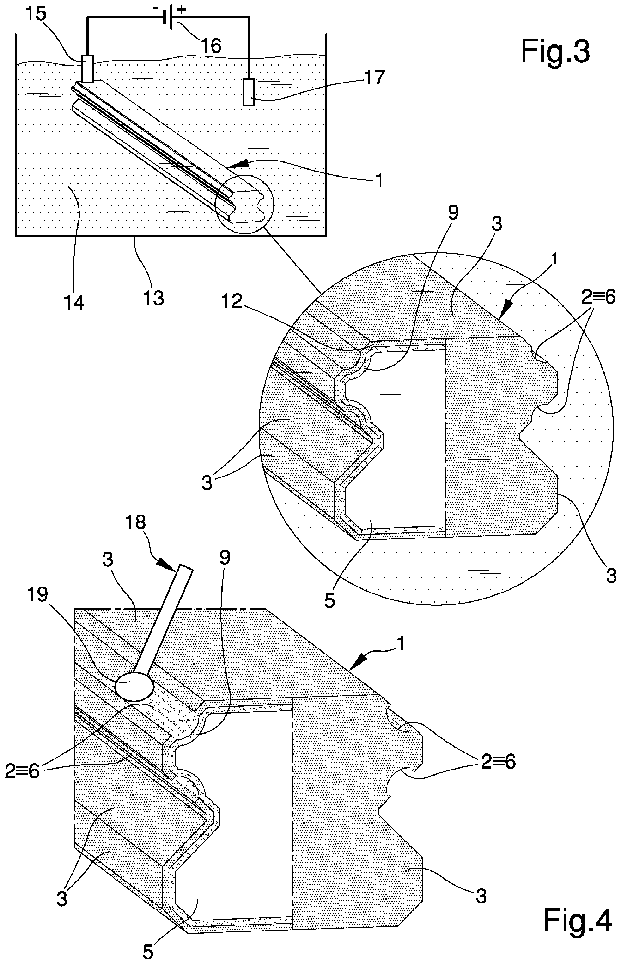

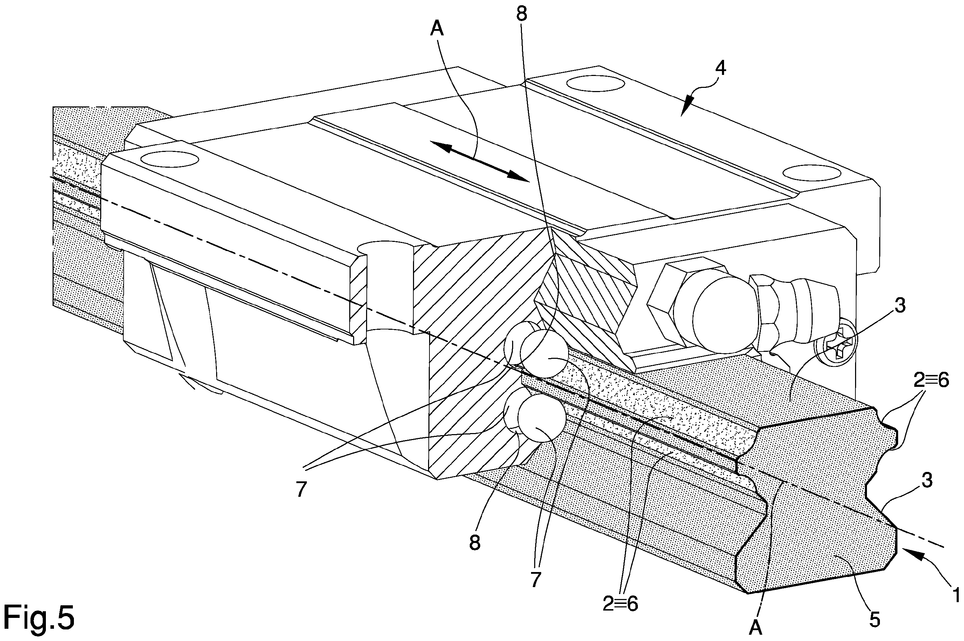

In the embodiment shown in the Figures 1 to 5, the guide 1 is a linear guide and the first portion 2 extends longitudinally along at least one main axis A.

In other words, the guide 1 is similar to a rail on which the carriage 4 is mobile and is provided with two opposed end faces 5.

In particular, the guide 1 and the carriage 4 are movable with respect to each other along the main axis A.

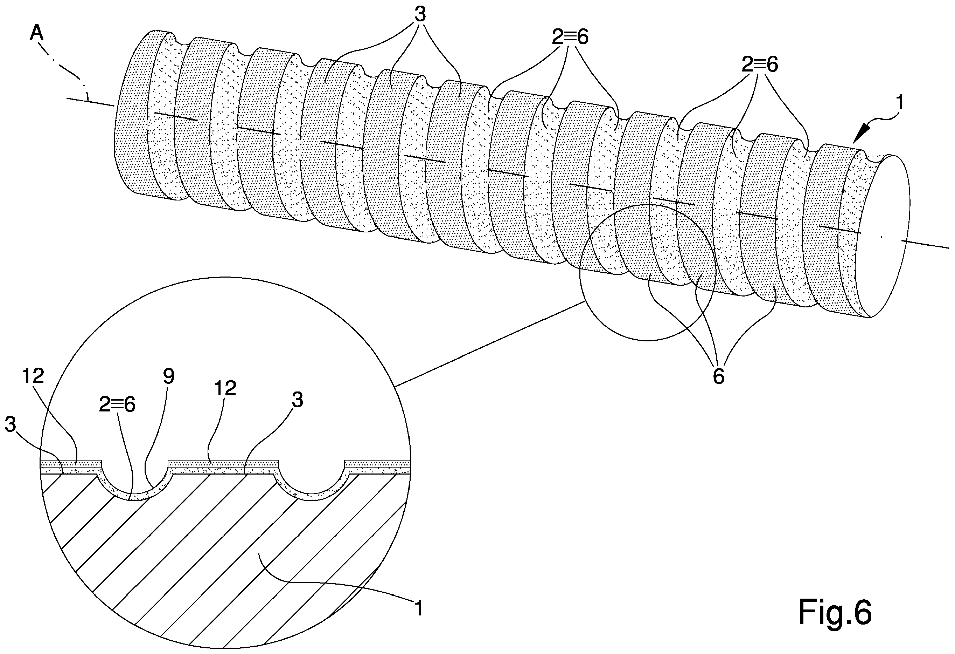

In the alternative embodiment shown in Figure 6, the guide 1 is a worm screw and the first portion 2 extends helicoidally along the main axis A.

In this case, the carriage 4 follows the path provided by the first portion 2, so it rotates around the main axis A and simultaneously moves with respect to the guide 1 along the main axis itself.

Advantageously, the first portion 2 is shaped to define at least one sliding slot 6 with cross section at least partly circular and concave in which a plurality of balls 7 are sliding which are adapted to move the carriage 4.

It is, in fact, a recirculation ball guide, wherein the balls 7, preferably made of steel, are housed inside the sliding slot 6 and, by means of their rolling, allow the relative movement between the guide 1 and the carriage 4.

In particular, the recirculation of the balls 7 is inside the carriage 4, i.e. the carriage itself is provided with at least one recirculation duct 8 inside which the balls 7 are preloaded which by rolling slide inside the circuit that is determined between the sliding slot 6 and the recirculation duct 8, thus transforming the rolling of the balls 7 into a crossways movement for the movement of the carriage 4 with respect to the guide 1.

The use of a guide 1 of this type provides numerous advantages in terms of high machining precision and high resistance to wear, also due to the fact that the guide 1 and the carriage 4 are never in direct contact with each other.

Usefully, the guide 1 comprises a plurality of first portions 2 each shaped to define a sliding slot 6.

In the particular embodiment shown in the Figures from 1 to 5, the guide 1 is a linear guide which comprises four first portions 2 each shaped to define a respective sliding slot 6 with cross section at least in part circular and concave in each of which is sliding a respective plurality of balls 7 adapted to move the carriage 4.

Consequently, in this particular embodiment, the carriage 4 is provided with four recirculation ducts 8 for the recirculation of the balls 7 which roll on each of the sliding slots 6.

The fact of providing a plurality of sliding slots 6 allows obtaining a more stable carriage 4 trim and a better load distribution.

The guide 1 shown in the illustrations is intended to be mounted on at least one PVC-working machine, such as a welding machine or the like, and the carriage 4 is associated with the parts of the machine itself and is adapted to the movement thereof, so as to perform the machining operations correctly. Generally, the operations carried out on the PVC, in particular welding, are carried out using hot methods.

Because of the high temperatures, during working operations, the PVC tends to decompose, albeit to a small extent, releasing gaseous chlorine which reacts with the water in the air in the form of moisture, thus producing hydrochloric acid.

Hydrochloric acid is a strong acid and is extremely corrosive, therefore all the parts of the machine can be subject to corrosion in even short periods of time. Furthermore, the gaseous chlorine which develops from decomposition causes the corrosion of the steel by pitting, causing the formation of holes that affect the stability of the workpiece.

Some parts of the machine are made of special steels, so that they are highly resistant to corrosion and to prevent them being damaged and periodically replaced.

However, these special steels have high costs, so the secondary elements of the machine, including the guide 1, are made from standard steels that are cheaper but are not resistant to the corrosive effect of the hydrochloric acid.

Still according to the invention, the process comprises at least the step of depositing at least a first coating layer 9 on the first portion 2 and on the second portion 3.

As schematically shown in the figures, in the deposition step the first coating layer 9 also deposits on the end faces 5 of the guide 1.

Usefully, the first coating layer 9 is metallic and is aimed at protecting the guide 1 from corrosion.

In particular, the deposition step of the first coating layer 9 is made by nickel-plating and, consequently, such first coating layer 9 is nickel.

The possibility of carrying out the deposition step of the first coating layer 9 by means of a treatment other than nickel plating, such as chrome plating, cannot however be ruled out, so that in this case the first coating layer 9 is made of chrome.

Nickel plating is a surface treatment applicable to objects of any shape and that allows making a nickel surface coating on the machined object, in order to increase its resistance to corrosion.

Nickel, in fact, is a more electronegative metal than the iron contained in the steel of which the guide 1 is composed and consequently it is more resistant to corrosion, including chlorine corrosion.

In particular, nickel plating involves the deposition of metallic nickel to form the first coating layer 9 by means of the reduction of nickel ions and can be performed chemically or electrolytically.

Advantageously, the nickel plating step is carried out by means of chemical nickel plating, which allows the deposition of the first coating layer 9 to be obtained by the direct action of reducing substances on the nickel ions to be deposited, although the possibility of making nickel plating by means of electrolytic nickel plating cannot be ruled out.

The first coating layer 9 obtained by means of chemical nickel plating is characterized by a very low porosity, so it has a sealing effect that prevents the penetration of the gaseous chlorine, which does not thus come into contact with the steel of which the guide 1 is made, protecting it from the corrosive effect of chlorine.

Moreover, chemical nickel plating allows obtaining a first coating layer 9 with a very smooth and regular surface finish and an extremely uniform thickness irrespectively of the shape and material of the guide 1, thus avoiding any grinding after the nickel plating step and ensuring the correct operation of the guide itself.

In particular, the fact of obtaining the first coating layer 9 with a remarkably regular surface finish is particularly important for the correct operation of the guide 1, as it ensures the rolling of the balls 7 inside the sliding slot 6, without the risk of scraping and the onset of friction.

Furthermore, the distance between the carriage 4 and the outer surface 2, 3 of the guide 1 is extremely small and the machine provides for a system of zero setting of the plays that minimize such distance.

Consequently, the fact that the first coating layer 9 has an extremely regular thickness allows the machine to be moved without the risk of the carriage 4 scraping on the outer surface 2, 3 of the guide 1.

Moreover, precisely because of the minimum distances between the guide 1 and the carriage 4, the thickness of the first coating layer 9 must be as small as possible, compatibly with the protective effect of the material.

In particular, the thickness of the first coating layer 9 is between 1 µm and 20 µm, that is, they are extremely small dimensions that allow ensuring the correct related movement between guide 1 and carriage 4.

Preferably, first coating layer 9 has a thickness equal to 10 µm, although the possibility of having a different thickness cannot be ruled out.

It is important to underline that within the scope of the present discussion, the representation of the first coating layer 9 has been carried out as an example and that such first coating layer has been represented with a considerably greater thickness than the real value in order to make it easily distinguishable. Chemical nickel plating is a chemical reduction process carried out in a nickel plating tank 10 in which a nickel plating bath 11 is prepared in which the guide 1 to be treated is soaked.

Such nickel plating bath 11 consists of an aqueous solution containing nickel in the form of salt, in particular nickel chloride (NiCl₂), together with a reducing agent, which is generally identifiable in the hypophosphite ion (H₂PO₂) which is inserted in the nickel plating bath itself in the form of sodium hypophosphite (NaH₂PO₂).

The use of a different nickel agent or the supply of nickel in the form of a salt different to that mentioned cannot however be ruled out.

During the nickel plating step of the guide 1, the hypophosphite ions are catalytically oxidized to phosphite ions, generating gaseous hydrogen, and causing the simultaneous reduction of the nickel cations to metallic nickel, which deposits on the first portion 2 and on the second portion 3, thus forming the first coating layer 9.

Still according to the invention, the process comprises at least one step of painting by cataphoresis of the guide 1 adapted to deposit at least a second coating layer 12 onto the first portion 2 and onto the second portion 3 on top of the first coating layer 9.

As in the nickel-plating step, in the cataphoresis painting step as well, the second coating layer 12 is also deposited on the end faces 5 of the guide 1, as well as on the outer surface 2, 3.

Painting by cataphoresis is a surface coating process which permits obtaining a second coating layer 12 with an extremely uniform thickness.

In particular, the second coating layer 12 has a thickness comprised between 15 µm and 35 µm.

Preferably, the second coating layer 12 has a thickness equal to 25 µm, although the possibility of having a different thickness cannot be ruled out.

As discussed above, it should be noticed that within the scope of the present discussion the representation of the second coating layer 12 was carried out as an example and that such second coating layer was represented with a significantly greater thickness than the real value in order to make it distinguishable.

Advantageously, the second coating layer 12 is made in at least one of an epoxy resin and an acrylic resin, i.e. polymeric materials characterized by high resistance to the action of acids, so they make it possible to protect the guide 1 from the corrosive action of hydrochloric acid.

In general, "cataphoresis" means the movement of positively charged particles soaked in a fluid by the effect of an electric field applied by means of a pair of electrodes.

In particular, painting by cataphoresis is carried out by electrochemical deposition of epoxy resin or acrylic resin which, within the polymer chain, comprise groups with considerable polarity, which therefore make them susceptible to the action of the electric field.

In practice, painting by cataphoresis is carried out in at least one cataphoresis tank 13 inside which at least one painting bath 14 is prepared, consisting of an aqueous solution wherein the epoxy resin or the acrylic resin is dispersed, which, being polar, is at least partly soluble in water, as well as in dyes and additives.

The guide 1 is soaked in the painting bath 14 and connected to a negative pole 15 of an electric generator 16, while a positive pole 17 is soaked in the painting bath itself.

The electric field and the electrochemical phenomena that occur inside the painting bath 14 cause the resin macromolecules to migrate towards the guide 1 and deposit on the outer surface 2, 3, forming the second coating layer 12. Furthermore, the possibility cannot be ruled out of the guide 1 undergoing a drying step in the oven at the end of the cataphoresis painting step, which permits carrying out the polymerization of the second coating layer 12, which is particularly useful when using a thermosetting resin, such as, e.g., epoxy resin. Finally, according to the invention, the process comprises at least one removal step of the second coating layer 12 from the first portion 2.

The resins of which the second coating layer 12 is composed have a rather rubbery texture, which does not allow the correct rolling inside the sliding slot 6 of the balls 7, which therefore tend to scrape on the resin, which being soft generates considerable friction.

Moreover, the scraping of the balls 7 tends to detach the second coating layer 12, creating accumulations of resin inside the sliding slot 6 that would prevent the correct movement of the carriage 4 with respect to the guide 1. Consequently, the removal step of the second coating layer 12 from the first portion 2 causes the balls 7 to rest on the first coating layer 9, which has a smooth and homogeneous surface finish and allows the balls themselves to roll without scraping.

Usefully, the second coating layer 12 is removed only from the first portion 2, while it is maintained on the second portion 3, in order to protect the uncovered parts of the guide 1 from the corrosive action of the hydrochloric acid and gaseous chlorine.

Despite the removal of the second coating layer 12, the first portion 2 remains protected against corrosion by the first coating layer 9.

Furthermore, the rolling of the balls 7 carries out a self-cleaning action of the system, as the rolling friction that occurs during the rolling of the balls themselves performs a micro-abrasion action on any deposits of oxides or dirt, keeping the sliding slot 6 in optimal working conditions.

Advantageously, the removal step is performed manually by using at least one tool 18 which is shaped in a manner at least partly complementary to the first portion 2.

In this way, therefore, it is possible to remove the second coating layer 12 in a precise manner without the risk of damaging the surface finish of the first coating layer 9.

Usefully, the tool 18 is provided with at least one removal portion 19 having a shape which is at least partly circular and convex, adapted to allow the second coating layer 12 to be removed from the first portion 2, as well as at least one grip portion 20 adapted to be gripped by the operator.

The shape of the removal portion 19 is such as to allow the resin to be removed in a single pass and, being convex, allows the material to be removed avoiding the formation of accumulations, so as to optimize the processing times.

In combination or as an alternative to manual removal, the removal step of the second coating layer 12 is performed automatically by using at least one laser device pointing towards the first portion 2.

The use of the laser applied to the first portion 2 effectively removes the second coating layer 12.

It is also possible to use in combination manual removal and automatic removal in order to make removal by means of the tool 18 less difficult, obtaining a qualitatively high result.

It is emphasized that Figure 6 shows a further embodiment of the guide obtained by means of the process according to the invention.

In particular, the guide 1 is provided with only one first portion 2 and, consequently, with only one sliding slot 6 inside which the balls 7 slide.

The sliding slot 6 has a helical shape and this allows the carriage 4 to move in rotation around the main axis A and in translation along the same axis.

Given the shape of the guide 1, the carriage 4 is provided with a single recirculation duct 8 inside which the balls 7 re-circulate.

It has in practice been found that the described invention achieves the intended objects.

In this regard, it is underlined that the particular solution of providing a process for coating a guide allows effectively protecting the surface from corrosion. Furthermore, the particular solution of providing a nickel plating step followed by a cataphoresis painting step allows protecting the guide from corrosion for a considerably long time, thus reducing the frequency of maintenance and associated costs.

In particular, the process allows considerably limiting corrosion due to chlorine and to the attack of acids, thus reducing the frequency and related costs of special maintenance.

Moreover, the particular solution of carrying out the nickel plating step by means of chemical nickel plating allows obtaining an extremely smooth and regular surface finish of the first coating layer, so that there is no need for grinding or further treatments, thus reducing operating costs.

Furthermore, the particular solution of providing the removal step of the second coating layer from the first portion allows ensuring the correct rolling of the balls housed inside a ball-bearing carriage that moves along the guide.

## Claims

1. Process for coating a guide, **characterized by** the fact that it comprises at least the steps of:
- supplying at least one guide (1) made of metallic material and comprising at least one outer surface (2, 3) provided with at least a first portion (2) adapted to slide at least one carriage (4) and at least a second portion (3) separate from said first portion (2);
- depositing at least a first coating layer (9) on said first portion (2) and on said second portion (3);
- cataphoretic painting said guide (1) adapted to deposit at least a second coating layer (12) onto said first portion (2) and onto said second portion (3) on top of said first coating layer (9); and
- removing said second coating layer (12) from said first portion (2).

2. Process according to claim 1, **characterized by** the fact that said guide (1) is a linear guide and said first portion (2) extends longitudinally along at least one main axis (A).

3. Process according to one or more of the preceding claims, **characterized by** the fact that said guide (1) is a worm screw and said first portion (2) extends helicoidally along said main axis (A).

4. Process according to one or more of the preceding claims, **characterized by** the fact that said first portion (2) is shaped to define at least one sliding slot (6) with cross section at least partly circular and concave in which a plurality of balls (7) are sliding which are adapted to move said carriage (4).

5. Process according to one or more of the preceding claims, **characterized by** the fact that said removal step is performed manually by using at least one tool (18) shaped in a manner at least partly complementary to said first portion (2).

6. Process according to one or more of the preceding claims, **characterized by** the fact that said tool (18) is provided with at least one removal portion (19) having a shape which is at least partly circular and convex.

7. Process according to one or more of the preceding claims, **characterized by** the fact that said removal step is performed automatically by using at least one laser device pointing towards said first portion (2).

8. Process according to one or more of the preceding claims, **characterized by** the fact that said first coating layer (9) is metal.

9. Process according to one or more of the preceding claims, **characterized by** the fact that said deposition step of said first coating layer (9) is made by nickel-plating and that said first coating layer (9) is nickel.

10. Process according to one or more of the preceding claims, **characterized by** the fact that said nickel-plating step is carried out by means of chemical nickel-plating.

11. Process according to one or more of the preceding claims, **characterized by** the fact that the thickness of said first coating layer (9) is between 1 µm and 20 µm.

12. Process according to one or more of the preceding claims, **characterized by** the fact that said first coating layer (9) has a thickness equal to 10 µm.

13. Process according to one or more of the preceding claims, **characterized by** the fact that said second coating layer (12) is made in at least one of an epoxy resin and an acrylic resin.

14. Process according to one or more of the preceding claims, **characterized by** the fact that said second coating layer (12) has a thickness comprised between 15 µm and 35 µm.

15. Process according to one or more of the preceding claims, **characterized by** the fact that said second coating layer (12) has a thickness equal to 25 µm.

## Patentansprüche

1. Verfahren zur Beschichtung einer Führung,
**dadurch gekennzeichnet, dass** dieses mindestens die folgenden Schritte umfasst:
- Bereitstellen mindestens einer Führung (1) aus metallischem Material, welche mindestens eine Außenfläche (2, 3), welche mit mindestens einem ersten Abschnitt (2), welcher dazu ausgelegt ist, mindestens einen Wagen (4) zu verschieben, und mindestens einem zweiten Abschnitt (3), welcher von dem ersten Abschnitt (2) getrennt ist, versehen ist, umfasst;
- Auftragen mindestens einer ersten Überzugsschicht (9) auf den ersten Abschnitt (2) und auf den zweiten Abschnitt (3);
- kataphoretische Lackierung der Führung (1), welche dazu ausgelegt ist, mindestens eine zweite Überzugsschicht (12) auf den ersten Abschnitt (2) und auf den zweiten Abschnitt (3) über der ersten Überzugsschicht (9) aufzutragen; und
- Abtragen der zweiten Überzugsschicht (12) von dem ersten Abschnitt (2).

2. Verfahren nach Anspruch 1, **dadurch gekennzeichnet, dass** die Führung (1) eine Linearführung ist und der erste Abschnitt (2) sich in Längsrichtung entlang mindestens einer Hauptachse (A) erstreckt.

3. Verfahren nach einem oder mehreren der vorhergehenden Ansprüche, **dadurch gekennzeichnet, dass** die Führung (1) eine Schneckenschraube ist und der erste Abschnitt (2) sich schraubenförmig entlang der Hauptachse (A) erstreckt.

4. Verfahren nach einem oder mehreren der vorhergehenden Ansprüche, **dadurch gekennzeichnet, dass** der erste Abschnitt (2) so geformt ist, dass er mindestens einen Gleitschlitz (6) mit mindestens teilweise kreisförmigem und konkavem Querschnitt definiert, in dem mehrere Kugeln (7) gleiten, welche dazu ausgelegt sind, den Wagen (4) zu bewegen.

5. Verfahren nach einem oder mehreren der vorhergehenden Ansprüche, **dadurch gekennzeichnet, dass** der Abtragschritt manuell unter Verwendung mindestens eines Werkzeugs (18) durchgeführt wird, welches zumindest teilweise komplementär zu dem ersten Abschnitt (2) geformt ist.

6. Verfahren nach einem oder mehreren der vorhergehenden Ansprüche, **dadurch gekennzeichnet, dass** das Werkzeug (18) mit mindestens einem Abtragsabschnitt (19) versehen ist, welcher eine zumindest teilweise kreisförmige und konvexe Form aufweist.

7. Verfahren nach einem oder mehreren der vorhergehenden Ansprüche, **dadurch gekennzeichnet, dass** der Abtragschritt automatisch unter Verwendung mindestens einer auf den ersten Abschnitt (2) gerichteten Laservorrichtung durchgeführt wird.

8. Verfahren nach einem oder mehreren der vorhergehenden Ansprüche, **dadurch gekennzeichnet, dass** die erste Überzugsschicht (9) aus Metall besteht.

9. Verfahren nach einem oder mehreren der vorhergehenden Ansprüche, **dadurch gekennzeichnet, dass** der Schritt des Auftragens der ersten Überzugsschicht (9) durch Vernickeln erfolgt und dass die erste Überzugsschicht (9) aus Nickel besteht.

10. Verfahren nach einem oder mehreren der vorhergehenden Ansprüche, **dadurch gekennzeichnet, dass** der Schritt des Vernickelns durch chemisches Vernickeln ausgeführt wird.

11. Verfahren nach einem oder mehreren der vorhergehenden Ansprüche, **dadurch gekennzeichnet, dass** die Dicke der ersten Überzugsschicht (9) zwischen 1 µm und 20 µm beträgt.

12. Verfahren nach einem oder mehreren der vorhergehenden Ansprüche, **dadurch gekennzeichnet, dass** die erste Überzugsschicht (9) eine Dicke von 10 µm aufweist.

13. Verfahren nach einem oder mehreren der vorhergehenden Ansprüche, **dadurch gekennzeichnet, dass** die zweite Überzugsschicht (12) aus einem Epoxidharz und/oder einem Acrylharz besteht.

14. Verfahren nach einem oder mehreren der vorhergehenden Ansprüche, **dadurch gekennzeichnet, dass** die zweite Überzugsschicht (12) eine Dicke zwischen 15 µm und 35 µm aufweist.

15. Verfahren nach einem oder mehreren der vorhergehenden Ansprüche, **dadurch gekennzeichnet, dass** die zweite Überzugsschicht (12) eine Dicke von 25 µm aufweist.

## Revendications

1. Procédé de revêtement d'un guide, **caractérisé par le fait qu'**il comprend au moins les étapes consistant à :
- fournir au moins un guide (1) fait de matériau métallique et comprenant au moins une surface extérieure (2, 3) dotée d'au moins une première portion (2) adaptée pour faire coulisser au moins un chariot (4) et d'au moins une seconde portion (3) distincte de la première portion (2) ;
- déposer au moins une première couche de revêtement (9) sur ladite première portion (2) et sur ladite seconde portion (3) ;
- peindre par cataphorèse ledit guide (1) adapté pour déposer au moins une seconde couche de revêtement (12) sur ladite première portion (2) et sur ladite seconde portion (3) par-dessus ladite première couche de revêtement (9) ; et
- retirer ladite seconde couche de revêtement (12) de ladite première portion (2).

2. Procédé selon la revendication 1, **caractérisé par le fait que** ledit guide (1) est un guide linéaire et ladite première portion (2) s'étend longitudinalement le long d'au moins un axe principal (A).

3. Procédé selon une ou plusieurs des revendications précédentes, **caractérisé par le fait que** ledit guide (1) est une vis sans fin et ladite première portion (2) s'étend de manière hélicoïdale le long dudit axe principal (A).

4. Procédé selon une ou plusieurs des revendications précédentes, **caractérisé par le fait que** ladite première portion (2) est formée pour définir au moins une fente de coulissement (6) avec une coupe transversale au moins en partie circulaire et concave dans laquelle une pluralité de billes (7) coulissent qui sont adaptées pour déplacer ledit chariot (4).

5. Procédé selon une ou plusieurs des revendications précédentes, **caractérisé par le fait que** ladite étape de retrait est réalisée manuellement en utilisant au moins un outil (18) formé d'une manière au moins en partie complémentaire de ladite première portion (2).

6. Procédé selon une ou plusieurs des revendications précédentes, **caractérisé par le fait que** ledit outil (18) est doté d'au moins une portion de retrait (19) ayant une forme qui est au moins en partie circulaire et convexe.

7. Procédé selon une ou plusieurs des revendications précédentes, **caractérisé par le fait que** ladite étape de retrait est réalisée automatiquement en utilisant au moins un dispositif laser pointant vers ladite première portion (2).

8. Procédé selon une ou plusieurs des revendications précédentes, **caractérisé par le fait que** ladite première couche de revêtement (9) est du métal.

9. Procédé selon une ou plusieurs des revendications précédentes, **caractérisé par le fait que** ladite étape de déposition de ladite première couche de revêtement (9) est faite par nickelage et en ce que ladite première couche de revêtement (9) est du nickel.

10. Procédé selon une ou plusieurs des revendications précédentes, **caractérisé par le fait que** ladite étape de nickelage est effectuée au moyen d'un nickelage chimique.

11. Procédé selon une ou plusieurs des revendications précédentes, **caractérisé par le fait que** l'épaisseur de ladite première couche de revêtement (9) est entre 1 µm et 20 µm.

12. Procédé selon une ou plusieurs des revendications précédentes, **caractérisé par le fait que** ladite première couche de revêtement (9) a une épaisseur égale à 10 µm.

13. Procédé selon une ou plusieurs des revendications précédentes, **caractérisé par le fait que** ladite seconde couche de revêtement (12) est faite en au moins une parmi une résine époxy et une résine acrylique.

14. Procédé selon une ou plusieurs des revendications précédentes, **caractérisé par le fait que** ladite seconde couche de revêtement (12) a une épaisseur comprise entre 15 µm et 35 µm.

15. Procédé selon une ou plusieurs des revendications précédentes, **caractérisé par le fait que** ladite seconde couche de revêtement (12) a une épaisseur égale à 25 µm.
